# EUROPEAN PATENT SPECIFICATION

(11) **EP 0 783 243 B1**
(45) Date of publication and mention of the grant of the patent: **21.02.2001**
(21) Application number: 95932272.8
(22) Date of filing: 08.09.1995
(51) Int. Cl.: A01K 3/00

(54) **ELECTRIC FENCE DEVICE**
ELEKTROZAUNGERÄT
CLOTURE ELECTRIQUE

(30) Priority: 15.09.1994 SE 9403088
(43) Date of publication of application: 16.07.1997
(73) Proprietor: Nordberg, Fred, 426 71 Västra Frölunda (SE)
(72) Inventor: Nordberg, Fred, 426 71 Västra Frölunda (SE)
(74) Representative: Janson, Ronny
(86) International application number: SE9501012
(87) International publication number: WO9608140

(56) References cited:
- DE-A- 4 402 144

## Description

Electric fences for enclosed pasture-land are previously known and appreciated for being simple and effective. They consist of a grounded mains- or battery-operated pulse generator for high voltage and low power and, connected thereto, a smooth metallic wire which is carried by insulating poles so as to surround the enclosed pasture-land. At first contact with the wire the domestic animals learn that it gives an unpleasant electric chock and thereafter avoid subsequent contact. To date simple stainless metallic wire has been used as wire material, in more sophisticated applications woven into a thin ribbon, which makes it more visible. The previously known type of electric fences have however, a considerable disadvantage. Young domestic animals which have not yet come into contact with the electric fence often approach it with such a speed that they are not restricted by the electric chock before the wire has already been torn off by their rush. The same situation applies to wild animals striving to pass the fence and not being aware of its effect. This way openings in the fence will occur and the cattle will scatter before the owner has observed the damage. The animals may then destroy valuable cultivations and cause work and trouble for the owner. The invention is a safe and economic solution to this and other problems. It is mainly characterized in that one or more electrically conductive wires are associated with an elastic material in such a way that the wires and the material together form a considerably but restricted and elastically stretchable string, which is electrically conductive at least on parts of its surface, and which together with the poles comprise the enclosure.

The invention will now be described by way of an embodiment according to the annexed drawing, wherein
- Fig. 1: shows a section of the string
- Fig. 2: shows the string in a side view
- Fig. 3: shows a portion of the enclosure
- Fig. 4: shows a portion of the enclosure in a horizontal section.

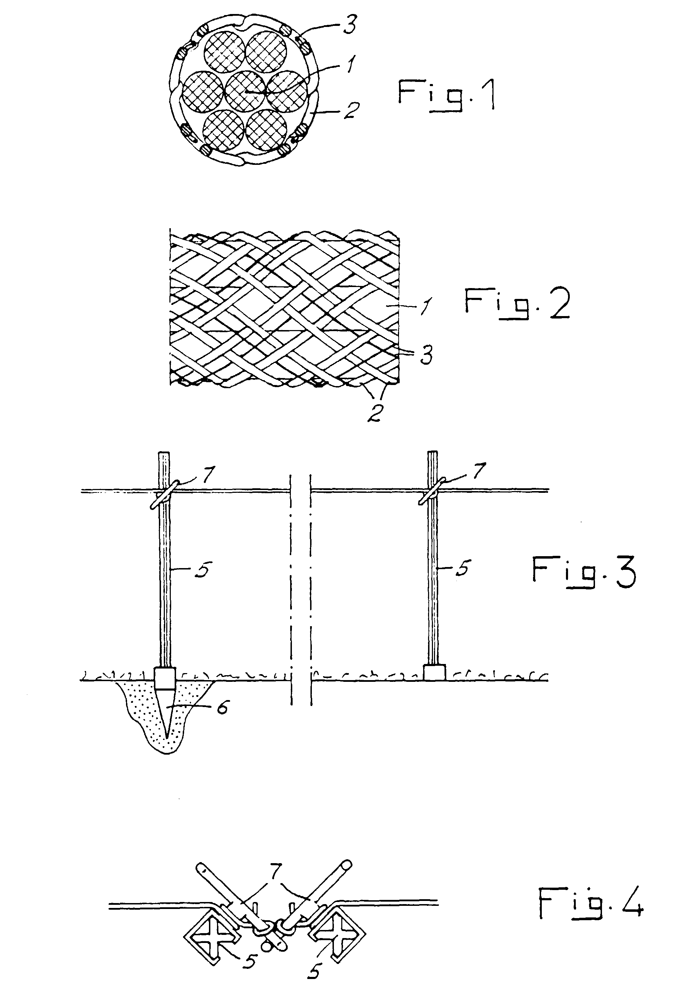

According to Fig.1 an elastic and electrically conductive string is formed around a synthetic rubber core 1 which preferably is divided into several treads, an envelope of tubular braided plastic threads 2 and a number of metal threads 3 included in the braid. The plastic material is preferably a high quality polyamide, e.g. one being known under the commercial denomination 6006, and is treated against UV-radiation degradation. The metallic thread is comprised of stainless steel with a diameter of 0.15 - 0.3 mm. The tubular braid allows the string to be stretched out to the length where the plastic threads 2 lie against each other in an almost longitudinal direction and it is dimensioned such with respect to the core 1 that the latter thereby is stretched to about two times its length in the state of rest. The outer diameter of the string is about 4 mm in its state of rest. A string which is formed in such a way is electrically conductive by the metallic threads being braided into its surface and is elastically stretchable because of the association between the rubber core and the braided envelope, but the stretchability is restricted by the lengths of the plastic threads. In order to secure the association between the core and the envelope, the string should be provided with a knot near all free ends. The properties of the string makes it ideal for replacing previously used metallic wires and ribbons in electric fences. It is thereby preferably hung on a post according to Fig. 3 which is comprised of a piece of a thin X-profile 5 of carbon fibre reinforced plastic material and which is provided with a pointed end 6 for pressing down into the ground and a movable attachment means 7 for the string. The attachment means 7 has the same shape as a boat anchor and is positioned obliquely with respect to the profile 5 in order to allow it to be hooked together with a similar attachment means of a neighbouring post of the same type as is illustrated on Fig. 4. The purpose of this is to provide the easiest way of arranging an easily opened place in the fence. The strings which are tied around the respective attachment means contact each other by this hooking together and thereby provide electrically conductive connection. If the post carrying the upper attachment means is slightly pressed down into the ground, it is simple to simultaneously pull it out from the ground and from the mutual connection between the attachment means so as to open the fence. Since both the profile 5 and the attachment means 7 are made from electrically insulating materials the post may be gripped and lifted simply by the hands.

When mounting the fence the string is stretched to about 3/4 of its possible length and is successively attached to the previously mounted posts, which are placed 15 - 20 m apart, by winding it one turn around the attachment means 7. By the fence being mounted this way the risk of it being run down by rushing animals is eliminated because its stretchability gives the animals time to slow down under the influence of the electric chocks from the string. The animal is not injured and the string will stretch it self straight again when the animal changes direction. The considerably better visibility of the string compared to a simple metal wire also reduces the risk of the animals running on to it. This may be enhanced by using plastic threads in several different colours in the envelope of the string.

Even if the above described embodiment of an elastic string is the most qualified for the intended use, the scoop of this invention also encloses several other embodiments. In its most simple form it is a rubber string which by mixing or impregnation with electrically conductive material is provided with a sufficient conductivity for the high voltage electrical pulses also on the surface. In another embodiment very thin threads of metal are mixed with equally thin threads of synthetic fibres and spun according to the method known from the knitwear industry such as to result in a so called tricot string. Such a string has a considerable elastic stretchability and may be twisted together to the thickness and strength necessary for electric fences. Alternatively such a string may be used for spinning around a rubber core. Moreover, a smooth steel wire which is wound into a helical spring and surrounds a rubber core may form the desired string.

Naturally all mentioned embodiments of elastic strings may be used in combination with other kinds of posts and attachments than the ones mentioned above.

## Claims

1. Electric fence device including a generator for high voltage electric pulses and a metallic enclosure connected thereto, **characterized** in that one or several electrically conductive threads (3) are associated with an elastic material (1) in such a way that the threads and the material together form a string which is considerably but restrictedly elastically stretchable, which is electrically conductive on at least parts of its surface, and which together with posts (5,6) comprise the enclosure.

2. Device according to claim 1, **characterized** in that the conductive threads (3) are mixed with non conductive plastic threads (2) and arranged as a tubular braid around a rubber core (1), the length of which in the free state being about half the length of the tubular braid in its stretched state.

3. Device according to claim 1 or 2, **characterized** in that the posts are provided with movable anchor-shaped attachment means (7) for the string.

## Patentansprüche

1. Elektrozaunvorrichtung, die einen Impulsgenerator für Hochspannung und ein daran, angeschlossenes metallisches Gehege aufweist, dadurch gekennzeichnet, dass ein oder mehrere elektrisch leitende Drähte (3) mit einem elastischen Material (1) so vereinigt sind, dass die Drähte und das Material zusammen einen bedeutend aber begrenzt elastisch dehnbaren und mindestens auf einem Teil seiner Oberfläche elektrisch leitenden Strang bilden, der zusammen mit Pfählen (5, 6) das Gehege darstellt.

2. Vorrichtung gemäss Patentanspruch 1, dadurch gekennzeichnet, dass die leitenden Drähte (3) mit nicht leitenden Kunststoffdrähten (2) gemischt und als Rundgeflecht um einen Kern (1) aus Gummi geflochten sind, wobei die Länge des Kerns in freiem Zustand etwa die Hälfte der Länge des Rundgefleichts in seinem gedehnten Zustand beträgt.

3. Vorrichtung gemäss Patentanspruch 1 oder 2, dadurch gekennzeichnet, dass die Pfähle mit versetzbaren ankerförmigen Halterungen (7) für den Strang ausgestattet sind.

## Revendications

1. Dispositif à clôture électrique comprenant un générateur d'impulsions électriques à haute tension et une enceinte métallique connectée à ce générateur, caractérisé en ce qu'un ou plusieurs fils électriquement conducteurs (3) sont associés à une matière élastique (1) d'une manière telle que les fils et la matière forment ensemble un cordon qui peut être étiré élastiquement de façon considérable, mais limitée, qui est électriquement conducteur sur au moins des parties de sa surface et qui, avec des piquets (5, 6) constitue l'enceinte.

2. Dispositif selon la revendication 1, caractérisé en ce que les fils conducteurs (3) sont mélangés à des fils non conducteurs (2) en matière plastique et agencés en une tresse tubulaire autour d'une âme (1) en caoutchouc dont la longueur, dans l'état libre, est d'environ la moitié de la longueur de la tresse tubulaire dans son état étiré.

3. Dispositif selon la revendication 1 ou 2, caractérisé en ce que les piquets sont pourvus de moyens mobiles (7) d'attache en forme d'ancre pour le cordon.
